# EUROPÄISCHE PATENTSCHRIFT

(11) **EP 1 355 820 B1**
(45) Veröffentlichungstag und Bekanntmachung des Hinweises auf die Patenterteilung: **18.08.2004**
(21) Anmeldenummer: 02710039.5
(22) Anmeldetag: 26.01.2002
(51) Int. Cl.: B62D 25/20, B60R 3/00, B62D 29/00

(54) **MOBILE ARBEITSMASCHINE MIT BEGEHBAREN PRITSCHEN**
MOBILE WORK MACHINE COMPRISING ACCESSIBLE PLATFORMS
ENGIN DE TRAVAIL MOBILE AVEC PLATEAUX SUR LESQUELS IL EST POSSIBLE DE SE DEPLACER

(30) Priorität: 30.01.2001 DE 10110840
(43) Veröffentlichungstag der Anmeldung: 29.10.2003
(73) Patentinhaber: PUTZMEISTER AKTIENGESELLSCHAFT, 72631 Aichtal (DE)
(72) Erfinder: SCHILLINGER, Dieter, 73765 Neuhausen (DE); SCHNEIDER, Dieter, 70794 Filderstadt (DE); HURR, Hellmut, 72760 Reutlingen (DE)
(74) Vertreter: Wolf, Eckhard, Dr.-Ing.
(86) Internationale Anmeldenummer: PCT/EP2002/000830
(87) Internationale Veröffentlichungsnummer: WO 2002/060744

(56) Entgegenhaltungen:
- EP-A- 0 915 006
- EP-A- 0 958 994
- DE-A- 4 414 567
- DE-A- 19 716 847
- GB-A- 1 392 940
- US-A- 3 330 577
- US-A- 6 068 277
- US-B1- 6 267 398

## Beschreibung

Die Erfindung betrifft eine mobile Arbeitsmaschine, insbesondere eine Autobetonpumpe, mit einem Fahrgestell und auf seitlich am Fahrgestell überstehenden Tragkonsolen liegenden, begehbaren Pritschen. Eine derartige Arbeitsmachine ist aus der AU 5 018 099 A (& US 6 267 398 B) bekannt. Dieses Dokument offenbart alle Merkmale des Oberbegriffs des Anspruchs 1.

An fahrbaren Betonpumpen befinden sich seitliche Pritschen, die einerseits als Laufsteg und zum anderen als Beladeflächen zur Aufnahme von Zubehörtellen, Kotflügeln, Kleinteilmagazinen, Werkzeugkisten, Kanthölzem und dergleichen dienen. Es ist bekannt, die Pritschen aus Metallblech, insbesondere aus Aluminium- oder Stahlblech herzustellen. Die Metallbleche werden auf Länge und Breite zugeschnitten und zur Erzielung einer ausreichenden Steifigkeit kreuz und quer mit Rippen verschweißt. Die Fixierung am Fahrgestell erfolgt über fahrgestellfeste Konsolen, die von unten her mit den Metallblechen verschraubt werden. Um eine ausreichende Aussteifung zu erhalten, muß ein relativ kleiner Rippenabstand eingehalten werden. Als Nachteil wird hierbei der relativ große Herstellungs- und Montageaufwand sowie die umfangreiche Lagerhaltung angesehen. Hinzu kommt, daß sich in den nach unten weisenden Verrippungen der beim Fahren aufgeschleuderte Schmutz ansammelt, der nur schwer zu entfernen ist. Auch die Variabilität der Montage- und Befestigungsmöglichkeiten läßt zu wünschen übrig, da jedes Befestigungsorgan an den Pritschen an geeigneter Stelle angeschweißt oder in einer eigens hierfür einzubringenden Bohrung angeschraubt werden mußte. Hinzu kommt, daß für die Leitungsführung im Pritschenbereich spezielle Kanäle und Befestigungsorgane angeschweißt werden müssen.

Ausgehend hiervon liegt der Erfindung die Aufgabe zugrunde, die mobile Arbeitsmaschine der eingangs angegebenen Art im Pritschenbereich dahingehend zu verbessern, daß die Herstellung vereinfacht und die Lagerhaltung reduziert wird und daß die Montage an den Tragkonsolen und die Verbindung mit Anbauteilen vereinfacht und dennoch variabler gestaltet wird.

Zur Lösung dieser Aufgabe wird die in dem Anspruch 1 angegebene Merkmalskombination vorgeschlagen. Vorteilhafte Ausgestaltungen und Weiterbildungen der Erfindung ergeben sich aus den Unteransprüchen.

Der erfindungsgemäßen Lösung liegt vor allem der Gedanke zugrunde, daß die Pritschen aus Hohlprofilschienen bestehen, die mit einer nach unten weisenden Hohlprofilwand auf den Tragkonsolen aufliegen und mit diesen lösbar verbunden sind. Die Hohlprofilschienen sind zweckmäßig als Strangpreßteile aus Aluminium ausgebildet. Grundsätzlich ist es auch möglich, die Hohlprofilschienen als Stranggußteile aus Kunststoff oder Compound-Material herzustellen.

Da die Werkzeuge für Strangpreßmaschinen oder Stranggußmaschinen ein begrenztes Austrittsmaß aufweisen, kann es bei breiten Pritschen notwendig sein, daß diese in der Querrichtung zusammengesetzt werden müssen. Dementsprechend wird gemäß einer bevorzugten Ausgestaltung der Erfindung vorgeschlagen, daß mindestens zwei an längsseitigen Stoßkanten miteinander verbundene Hohlprofilschienen vorgesehen sind. Damit hat man auch die Möglichkeit, unterschiedliche Strangpreß- oder Stranggußprofile zusammenzusetzen, z.B. ein Außenprofil und ein anders strukturiertes Innenprofil. Das Außenprofil kann dabei zusätzlich mit einer von der Pritschenfläche nach unten gezogenen Außenblende versehen werden, die beispielsweise mit Begrenzungsleuchten bestückt werden kann. Auf der Rückseite der Blende ist genügend Raum zur Unterbringung der Befestigungselemente, der elektrischen Einrichtung und der Leitungen für die Begrenzungsleuchten. Am einen äußeren Abschlußprofil oder an der Außenblende können außerdem Schamiertelle für einen schwenkbaren Schlag angeordnet werden.

Gemäß der Erfindung welsen die Hohlprofilschienen nach unten offene hinterschnittene Längsnuten zur Aufnahme von mit Schraubbohrungen oder -zapfen versehenen Nutensteinen auf. Die Nutensteine können an beliebiger Stelle der Längsnuten plaziert werden und sind vor allem zur Befestigung der Pritschen an den Tragkonsolen bestimmt. Vorteilhafterweise sind die Tragkonsolen als im Querschnitt U-förmige Träger ausgebildet, die an ihrem nach oben weisenden Verbindungssteg über Nutensteine mit den Hohlprofilschienen verschraubt sind. Weiter können einzelne Gruppen von Nutensteinen zur Fixierung von kasten oder magazinförmigen Bauteilen an der Pritschenunterseite vorgesehen werden. Einzelne Nuten oder Hohlkammern der Hohlprofilschienen sind zur Aufnahme von Leitungen, insbesondere von Elektro-, Pneumatik- oder Hydraulikleitungen bestimmt. Auch in Längsrichtung können die Hohlprofilschienen unterteilt werden, insbesondere ist es möglich, dass zwei Pritschenteile durch ein Zwischenstück, das beispielsweise. zur Aufnahme eines ausschwenkbaren oder teleskopierbaren Stützbeins bestimmt ist, voneinander getrennt werden.

An ihrer Oberseite tragen die Hohlprofilschienen zweckmäßig eine rutschsicher strukturierte Lauffläche.

Gemäß einer bevorzugten oder alternativen Ausgestaltung der Erfindung ist am Ende der Pritsche eine Aufstiegstreppe vorgesehen, die mit einem rohrförmigen Handlauf versehen ist, der über eine obere konvex gebogene Handlaufpartie mit einem rückwärtigen rohrförmigen Stützholm verbunden ist und der zusammen mit dem Stützholm einen Freiraum begrenzt, in welchem mindestens ein Gehäuse, insbesondere zur Aufnahme einer Bedieneinrichtung angeordnet Ist. Die zu dem Gehäuse führenden Leitungen, insbesondere Elektro-, Pneumatik- oder Hydraulikleitungen, können innerhalb des Handlaufs und/oder des Stützholms geschützt angeordnet werden. Um den Handlauf freizuhalten, wird das mindestens eine Gehäuse zweckmäßig am Stützholm fixiert. Eine bevorzugte Ausgestaltung der Erfindung sieht vor, daß der Handlauf und der Stützholm ein einstückiges, im wesentlichen U-förmig gebogenes Metallrohr bilden. Um beim Anfahren an eine Baustelle Kollisionen zu vermelden, ist die Aufstiegstreppe zumindest im Bereich ihrer untersten Treppe höhenverstellbar oder flexibel ausgebildet.

Im folgenden wird die Erfindung anhand eines in der Zeichnung in schematischer Weise dargestellten Ausführungsbeispiels näher erläutert. Es zeigen
- Fig. 1: eine Seitenansicht einer Autobetonpumpe mit seitlich am Fahrgestell angeordneten Pritschen;
- Fig. 2a: bis c eine Draufsicht, eine Seitenansicht und einen Schnitt einer am Fahrgestell angeordneten Pritsche in gegenüber Fig. 1 vergrößerter Darstellung;
- Fig. 3: einen Schnitt durch die aus mehreren Hohlprofilschienen zusammengesetzte Pritsche ohne Konsole ;
- Fig. 4a: einen Schnitt durch die am Fahrgestell angeordnete Pritsche in einer gegenüber Fig. 2 vergrößerten Darstellung;
- Fig. 4b: eine Darstellung entsprechend Fig. 4a mit an der Unterbauseite befestigtem Anbauteil;
- Fig. 5a und b: zwei verschiedene Seitenansichten eines Handlaufs mit Stützholm für die Aufstiegstreppe nach Fig. 1.

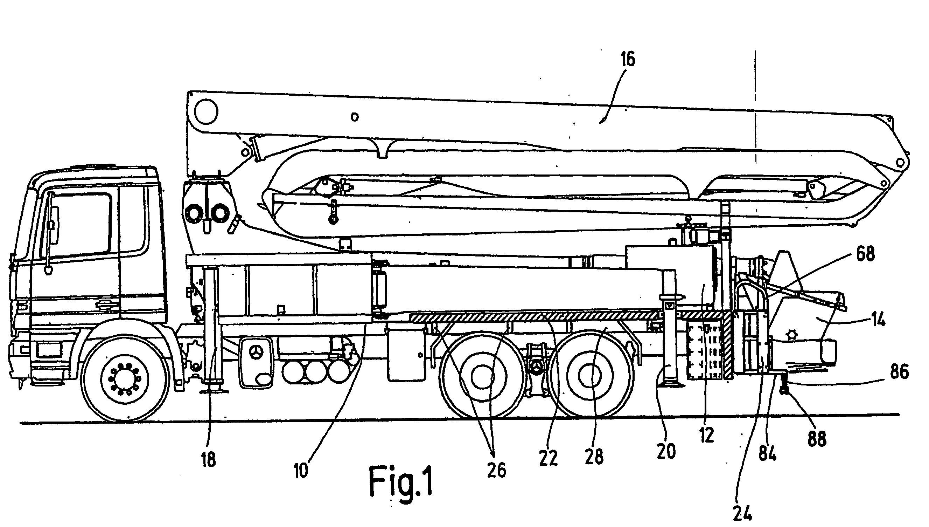

Die In Fig. 1 dargestellte Autobetonpumpe weist ein Fahrgestell 10, eine auf dem Fahrgestell angeordnete Dickstoffpumpe 12 mit Materialaufgabebehälter 14 und Verteilermast 16, vorder- und rückwärtige, am Fahrgestell ausfahrbare Stützbeine 18, 20, zwei seitlich neben der Dickstöffpumpe 12 und dem Verteilermast 16 am Fahrgestell angeordnete Pritschen 22 sowie eine zu den Pritschen führende rückwärtige Aufstiegstreppe 24 auf. Die Pritschen 22 liegen auf Tragkonsolen 26 auf, die im Abstand voneinander an zugehörigen Längsträgem 28 des Fahrgestells 10 angeschweißt sind und seitlich über diese überstehen. Die Pritschen 22 bestehen aus Hohlprofilschienen 30, 30', 32, die mit ihrer nach unten weisenden Profilwand 34 auf den Tragkonsolen 26 aufliegen und mit diesen lösbar verbunden sind. Bei dem gezeigten Ausführungsbeispiel sind drei Hohlprofilschienen 30, 30' und 32 an längsseitigen Stoßkanten 36, 38 miteinander form- und kraftschlüssig verbunden. Die Verbindung stellt eine Art Nut- und Federverbindung im Bereich der Stoßkanten 36, 38 dar. Auf der Fahrgestellseite ist auf die Stoßkante 40 der inneren Profilschiene 30 nach dem gleichen Nut- und Federprinzip eine innere Abschlußblende 42 aufgesetzt. Die beiden Inneren Hohlprofilschienen 30, 30' sind baugleich, während die äußere Hohlprofilschiene 32 ein Abschlußprofil 44 mit einer Außenblende 46 aufweist. Die Außenblende eignet sich zur Befestigung von äußeren Begrenzungsleuchten, deren elektrische Zuführleitungen auf der Innenseite der Abschlußblende 46 der Pritsche entlanggeführt werden können. Weiter kann im Bereich des Abschlußprofils 44 und der Außenblende 46 ein um 180° schwenkbarer, in nach oben weisender Stellung verriegelbarer Schlag angelenkt werden.

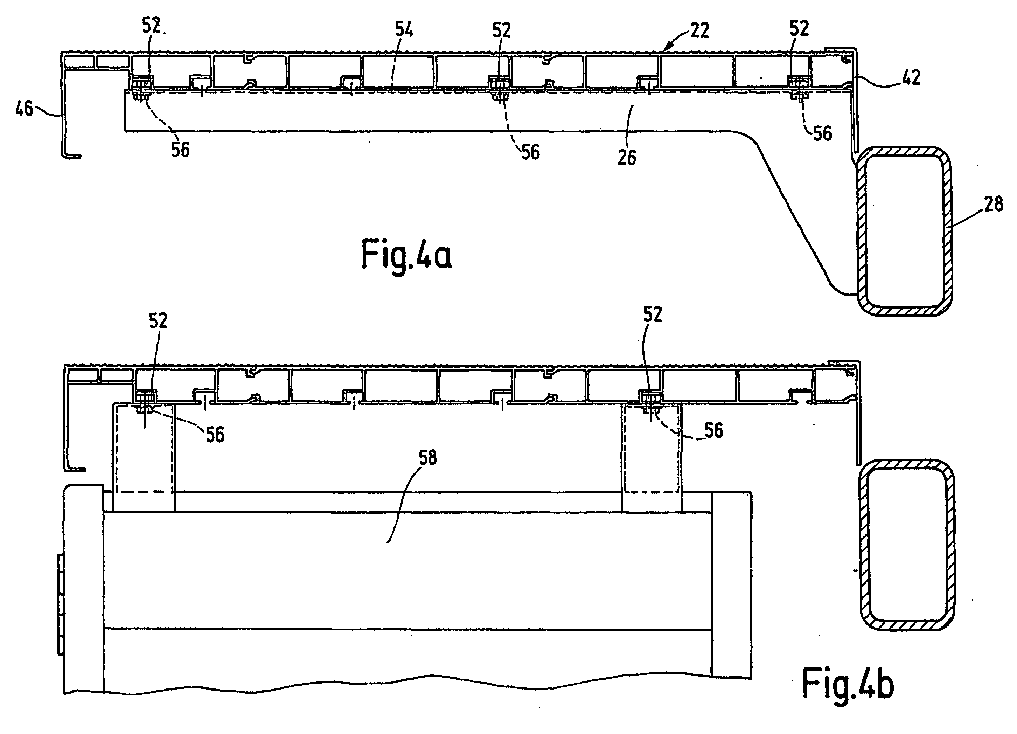

Die Hohlprofilleisten 30, 30', 32 weisen neben ihren Hohlkammern 48 nach unten offene, hinterschnittene Längsnuten 50 zur Aufnahme von mit Schraubbohrungen oder -zapfen versehenen Nutensteinen 52 auf. Die Nutensteine 52 können an beliebigen Stellen der Längsnuten positioniert werden. Die in den Längsnuten 50 befindlichen Nutensteine 52 werden einmal zur Fixierung der die Pritschen bildenden Hohlprofilschienen 30, 30', 32 an den Tragkonsolen 26 verwendet. Zu diesem Zweck sind die Tragkonsolen 26 als im Querschnitt U-förmige Träger ausgebildet, die an ihrem nach oben weisenden Verbindungssteg 54 mittels Schrauben 56 über die Nutensteine 52 mit den Hohlprofilschienen verschraubt sind (vgl. Fig. 4a). Wie aus Fig. 4b zu ersehen ist, können über die Längsnuten 50 und die Nutensteine 52 auch Anbauteile 58, wie Werkzeugkästen, Magazine o. dgl. mittels Schrauben 56 von unten her fixiert werden. Die Hohlkammern 48 und die Längsnuten 50 eignen sich außerdem zur Unterbringung von Leitungen, insbesondere von Elektro-, Pneumatik- oder Hydraulikleitungen, die entlang dem Fahrgestell der Autobetonpumpe verlegt werden müssen.

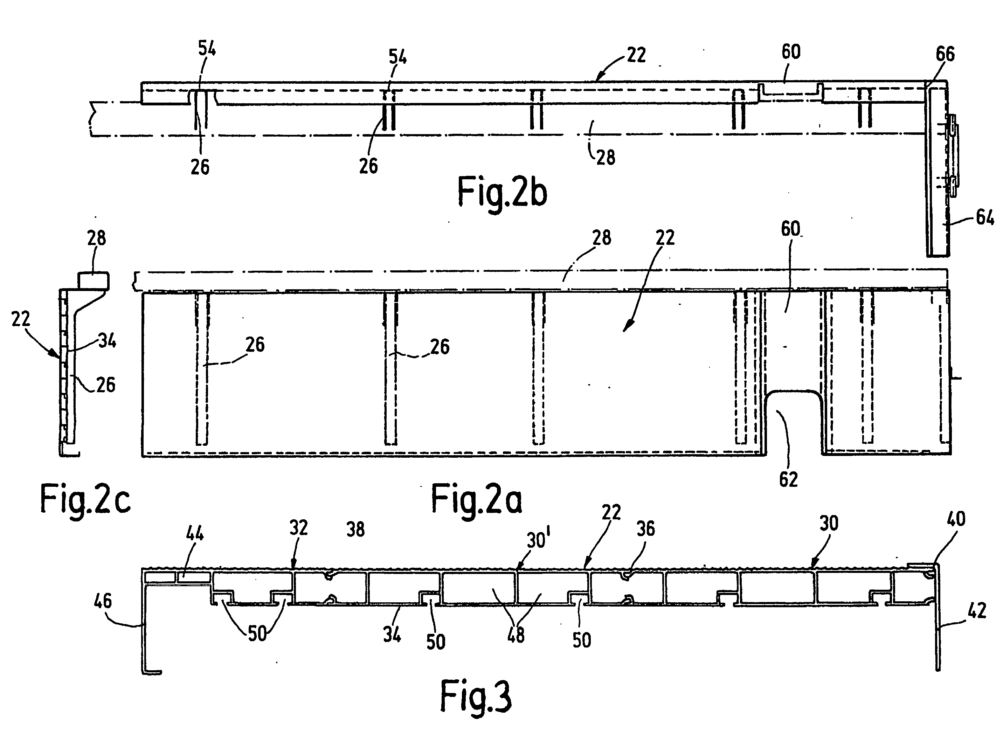

Wie insbesondere aus Fig. 2a und b ersichtlich ist, ist die Pritsche in Längsrichtung in zwei Teile unterteilt, die durch ein Zwischenstück 60 voneinander getrennt sind. Das Zwischenstück 60 weist eine nach außen randoffene, durch einen Schieber verschließbare Ausnehmung zur Aufnahme des rückwärtigen Stützbeins 20 in der eingeschwenkten Endstellung auf.

An ihrem rückwärtigen Ende ist die Pritsche 22 durch eine nach unten weisende Abschlußplatte 64 begrenzt, die aus den gleichen Hohlprofilschienen 30, 30', 32 wie die Pritsche zusammengesetzt ist. Die Abschlußplatte 64 ist an der Verbindungsstelle 66 mit den Hohlprofilschienen der Pritsche 22 entweder rechtwinklig (wie dargestellt) oder auf Gehrung verschraubt.

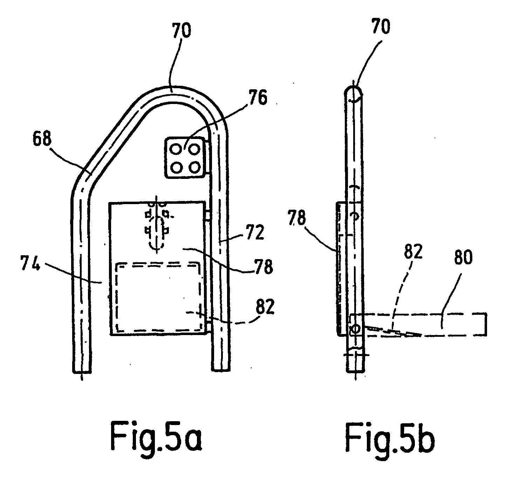

An die Abschlußplatte 64 schließt sich die Aufstiegstreppe 24 an, die seitlich durch Handläufe 68 begrenzt ist. Die Handläufe 68 sind über eine obere gekrümmte Handlaufpartie 70 mit einem rückwärtigen Stützholm 72 einstückig verbunden. Der Handlauf 68, die Handlaufpartie 70 und der Stützholm 72 bilden ein U-förmig gekrümmtes Metallrohr, das an den freien Enden mit der Aufstiegstreppe verschraubt ist und zwischen Handlauf 68 und Sützholm 72 einen Freiraum 74 begrenzt. Am Stützholm 72 ist eine Bedienbox 76 und ein kofferartiges Gehäuse 78 zur Unterbringung von Schriftgut und Schreibwerkzeugen befestigt, die den Freiraum 74 für ihre Unterbringung weitgehend ausnutzen. Die zur Bedienbox 76 führenden Leitungen sind durch den freien Innenraum des rohrförmigen Handlaufs 68 hindurchgeführt. Wie aus Fig. 5b zu ersehen ist, dient der Schriftgutbehälter 78 im aufgeklappten Zustand des Deckels 80 auch als Schreibunterlage für das Schriftgut 82.

An der untersten Stufe 84 der Aufstiegstreppe 24 ist über flexible oder höhenverstellbare Seitenteile 86 ein weiteres Stufenelement 88 befestigt, das einen leichteren Aufstieg zur Treppe 24 ermöglicht und dafür sorgt, daß die Aufstiegstreppe 24 beim Positionieren der Autobetonpumpe an der Baustelle nicht durch Kollisionen beschädigt werden kann.

## Patentansprüche

1. Mobile Arbeitsmaschine, insbesondere Autobetonpumpe, mit einem Fahrgestell (10) und auf seitlich am Fahrgestell (10) überstehenden Tragkonsolen (26) aufliegenden, begehbaren Pritschen (22), wobei die Pritschen (22) aus Hohlprofilschienen (30, 30', 32) bestehen, die mit einer nach unten weisenden Profilwand (34) auf den Tragkonsolen (26) aufliegen und mit diesen lösbar verbunden sind, **dadurch gekennzeichnet, daß** die Hohlprofilschienen (30, 30', 32) nach unten offene, hinterschnittene Längsnuten (50) zur Aufnahme von mit Schraubbohrungen oder -zapfen versehenen Nutensteinen (52) aufweisen.

2. Mobile Arbeitsmaschine nach Anspruch 1, **dadurch gekennzeichnet, daß** mindestens zwei an längsseitigen Stoßkanten (36, 38) miteinander verbundene Hohlprofilschienen (30, 30', 32) vorgesehen sind.

3. Mobile Arbeitsmaschine nach Anspruch 1 oder 2, **dadurch gekennzeichnet, daß** die Hohlprofilschienen (30, 30', 32) als Strangpreßteile aus Aluminium ausgebildet sind.

4. Mobile Arbeitsmaschine nach Anspruch 1 oder 2, **dadurch gekennzeichnet, daß** die Hohlprofilschienen als Stranggußteile aus Kunststoff oder Compound-Material ausgebildet sind.

5. Mobile Arbeitsmaschine nach einem der Ansprüche 1 bis 4, **dadurch gekennzeichnet, daß** die Tragkonsolen (26) als im Querschnitt U-förmige Träger ausgebildet sind, die an ihrem nach oben weisenden Verbindungssteg (54) über die Nutensteine (52) mit den Hohlprofilschienen (30, 30', 32) verschraubt sind.

6. Mobile Arbeitsmaschine nach einem der Ansprüche 1 bis 5, **dadurch gekennzeichnet, daß** einzelne Gruppen von Nutensteinen (52) zur Fixierung von kasten- oder magazinförmigen Anbauteilen (58) an der Pritschenunterseite vorgesehen sind.

7. Mobile Arbeitsmaschine nach einem der Ansprüche 1 bis 6, **dadurch gekennzeichnet, daß** einzelne Nuten (50) oder Hohlkammem (48) der Hohlprofilschienen (30, 30', 32) zur Aufnahme von Leitungen, insbesondere von Elektro-, Pneumatik- oder Hydraulikleitungen bestimmt sind.

8. Mobile Arbeitsmaschine nach einem der Ansprüche 1 bis 7, **dadurch gekennzeichnet, daß** in Längsrichtung mindestens zwei als Hohlprofilschienen (30, 30', 32) ausgebildete Pritschenteile vorgesehen sind.

9. Mobile Arbeitsmaschine nach Anspruch 8, **dadurch gekennzeichnet, daß** die Pritschenteile durch ein Zwischenstück (60) zur Aufnahme eines ausfahrbaren Stützbeins (20) voneinander getrennt sind.

10. Mobile Arbeitsmaschine nach einem der Ansprüche 1 bis 9, **dadurch gekennzeichnet, daß** die die Pritschen bildenden Hohlprofilschienen (32) durch ein äußeres Abschlußprofil (44) begrenzt sind, das eine nach unten weisende Außenblende (46) aufweist.

11. Mobile Arbeitsmaschine nach Anspruch 10, **dadurch gekennzeichnet, daß** am Abschlußprofil (44) oder an der Außenblende (46) Schamierteile für einen schwenkbaren Schlag angeordnet sind.

12. Mobile Arbeitsmaschine nach Anspruch 10 oder 11, **dadurch gekennzeichnet, daß** die Außenblende (46) Aufnahmen für Seitenstrahler aufweist.

13. Mobile Arbeitsmaschine nach einem der Ansprüche 1 bis 12, **dadurch gekennzeichnet, daß** die Hohlprofilschienen (30, 30', 32) eine rutschsicher strukturierte Lauffläche aufweisen.

14. Mobile Arbeitsmaschine nach einem der Ansprüche 1 bis 13, **dadurch gekennzeichnet, daß** die Tragkonsolen (26) an einem gestellfesten Rahmenlängsträger (28) befestigt, vorzugsweise angeschweißt oder angeschraubt sind.

15. Mobile Arbeitsmaschine nach einem der Ansprüche 1 bis 14, **dadurch gekennzeichnet, daß** am Ende der Pritsche (22) eine Aufstiegstreppe (24) mit einem rohrförmigen Handlauf (68) angeordnet ist, der über eine obere, konvex gebogene Handlaufpartie (70) mit einem rückwärtigen Stützholm (72) verbunden ist und der zusammen mit dem Stützholm (72) einen Freiraum (74) begrenzt, in welchem mindestens ein Gehäuse (76, 78), insbesondere zur Aufnahme einer Bedieneinrichtung, angeordnet ist.

16. Mobile Arbeitsmaschine nach Anspruch 15, **dadurch gekennzeichnet, daß** der Handlauf (68) und der Stützholm (72) ein einstückiges, U-förmig gebogenes Metallrohr bilden.

17. Mobile Arbeitsmaschine nach Anspruch 15 oder 16, **dadurch gekennzeichnet, daß** innerhalb des Handlaufs (68) und/oder des Stützholms (72) zu dem Gehäuse führende Leitungen, insbesondere Elektro-, Pneumatik- oder Hydraulikleitungen, angeordnet sind.

18. Mobile Arbeitsmaschine nach einem der Ansprüche 15 bis 17, **dadurch gekennzeichnet, daß** das mindestens eine Gehäuse (76, 78) am Stützholm (72) fixiert ist.

19. Mobile Arbeitsmaschine nach einem der Ansprüche 15 bis 18, **dadurch gekennzeichnet, daß** die Aufstiegstreppe (24) zumindest im Bereich ihrer untersten Stufe (88) biegsam oder höhenverstellbar ausgebildet ist.

## Claims

1. Mobile work machine, in particular mobile concrete pump, with a vehicle chassis (10) and accessible platforms (22) provided on carrier brackets (26) projecting laterally from the vehicle chassis (10), wherein the platforms (22) are comprised of hollow profile rails (30, 30', 32), of which a downward facing profile wall (34) lies on the carrier brackets (26) and is releasably connected thereto, thereby **characterized, that** that the hollow profile rails (30, 30', 32) exhibit downwards open, cut-back longitudinal grooves (50) for receiving groove stones (52) provided with threaded bores or threaded rods.

2. Mobile work machine according to Claim 1, thereby **characterized, that** at least two hollow profile rails (30, 30', 32) are provided connected with each other along two longitudinal side abutment edges (36, 38).

3. Mobile work machine according to Claim 1 or 2, thereby **characterized, that** the hollow profile rails (30, 30', 32) are extrusion press parts of aluminum.

4. Mobile work machine according to Claim 1 or 2, thereby **characterized, that** the hollow profile rails are extrusion mold parts of plastic or compound material.

5. Mobile work machine according to one of Claims 1 through 4, thereby characterized, **thereby characterized, that** the carrier brackets (26) are cross-sectionally U-shaped carriers, which on their upward facing cross-piece (54) are screw fastened with the hollow profile rails (30, 30', 32) via the groove stones (52).

6. Mobile work machine according to one of Claims 1 to 5, thereby **characterized, that** individual groups of groove stones (52) are provided for mounting box or magazine shaped add on parts (58) to the platform lower side.

7. Mobile work machine according to one of Claims 1 through 6, thereby **characterized, that** individual grooves (50) or hollow chambers (48) of the hollow profile rails (30, 30', 32) are adapted for receiving lines, in particular electrical, pneumatic or hydraulic lines.

8. Mobile work machine according to one of Claims 1 through 8, thereby **characterized, that** in the longitudinal direction at least two platform parts are provided in the form of hollow profile rails (30, 30', 32).

9. Mobile work machine according to Claim 8, thereby **characterized, that** the platform parts are separated from each other via an intermediate piece (60) for receiving an extendable support leg (20).

10. Mobile work machine according to one of Claims 1 through 9, thereby **characterized, that** the hollow profile rails (32), forming the platform are bordered by an outer closure profile (44), which exhibits a downward extending outer plate (46).

11. Mobile work machine according to Claim 10, thereby **characterized, that** on the closure profile (44) or on the outer plate (46) hinge parts are provided for a pivotable striker.

12. Mobile work machine according to Claim 10 or 11, thereby **characterized, that** the outer plate (46) includes receptacles for receiving running lights.

13. Mobile work machine according to one of Claims 1 through 12, thereby **characterized, that** the hollow profile rails (30, 30', 32) exhibit an anti-skid structured walking surface.

14. Mobile work machine according to one of Claims 1 through 13, thereby **characterized, that** the carrier brackets (26) are secured to a chassis-fixed longitudinal frame beam (28), preferably welded or screwed on.

15. Mobile work machine according to one of Claims 1 through 14, thereby **characterized, that** on the end of the platform (22) a climb-up ladder (24) with a tube-shaped handrail (68) is provided, which via an upper, convex bent handrail part (70) is connected with a rearward support rail (72) and which together with the support rail (72) defines a free space (74), in which at least one housing (76, 78), is provided, preferably for receiving a service or maintenance device.

16. Mobile work machine according to Claim 15, thereby **characterized, that** the handrail (68) and the support rail (72) are formed of a one-piece U-shaped bent metal pipe.

17. Mobile work machine according to Claim 15 or 16, thereby **characterized, that** within the handrail (68) and/or the support rail (72) lines leading to the housing, in particular electrical, pneumatic or hydraulic lines, are located.

18. Mobile work machine according to Claim 15 or 16, thereby **characterized, that** at least one housing (76, 78) is connected to the support rail (72).

19. Mobile work machine according to one of Claims 15 through 18, thereby **characterized, that** the climb-up ladder (24) is flexible or height adjustable at least in the area of its lower most step (88).

## Revendications

1. Engin de travail mobile, notamment pompe à béton sur camion, avec un châssis (10) et avec des plateaux praticables (22) reposant sur des consoles porteuses (26) dépassant sur les côtés du châssis (10), les plateaux (22) étant constitués de profilés creux (30, 30', 32) qui reposent sur les consoles porteuses (26) par une paroi de profilé (34) dirigée vers le bas et sont assemblés avec lesdits profilés de manière amovible, **caractérisé en ce que** les profilés creux (30, 30', 32) présentent des rainures longitudinales contre-dépouillées (50), ouvertes vers le bas, pour recevoir des coulisseaux (52) pourvus de taraudages ou de tenons filetés.

2. Engin de travail mobile selon la revendication 1, **caractérisé en ce qu'**il est prévu au moins deux profilés creux (30, 30', 32) mutuellement assemblés sur des arêtes de bords longitudinaux (36, 38).

3. Engin de travail mobile selon la revendication 1 ou 2, **caractérisé en ce que** les profilés creux (30, 30', 32) sont réalisés sous la forme de profilés extrudés d'aluminium.

4. Engin de travail mobile selon la revendication 1 ou 2, **caractérisé en ce que** les profilés creux sont réalisés sous la forme de profilés de coulée continue en matière plastique ou en matériau composite.

5. Engin de travail mobile selon l'une des revendications 1 à 4, **caractérisé en ce que** les consoles porteuses (26) sont réalisées sous la forme d'éléments porteurs à section en U qui, par leur âme (54) dirigée vers le haut, sont assemblés par boulonnage ou vissage aux profilés creux (30, 30', 32) par l'intermédiaire des coulisseaux (52).

6. Engin de travail mobile selon l'une des revendications 1 à 5, **caractérisé en ce que** certains groupes de coulisseaux (52) sont prévus pour la fixation sur le dessous des plateaux de pièces rapportées (58) en forme de caisses ou de magasins.

7. Engin de travail mobile selon l'une des revendications 1 à 6, **caractérisé en ce que** certaines rainures (50) ou cavités (48) des profilés creux (30, 30', 32) sont destinées à recevoir des conduites, notamment des conduites électriques, pneumatiques ou hydrauliques.

8. Engin de travail mobile selon l'une des revendications 1 à 7, **caractérisé en ce qu'**il est prévu, en direction longitudinale, au moins deux parties de plateau réalisées sous forme de profilés creux (30, 30', 32).

9. Engin de travail mobile selon la revendication 8, **caractérisé en ce que** les parties de plateau sont séparées entre elles par une entretoise (60) destinée à recevoir une béquille déployable (20).

10. Engin de travail mobile selon l'une des revendications 1 à 9, **caractérisé en ce que** les profilés creux (32) formant les plateaux sont délimités par un profilé terminal extérieur (44) qui présente un bandeau ou cadre extérieur (46) dirigé vers le bas.

11. Engin de travail mobile selon la revendication 10, **caractérisé en ce que** des éléments de charnière pour une trappe pivotante sont disposés sur le profilé terminal (44) ou sur le bandeau ou cadre extérieur (46).

12. Engin de travail mobile selon la revendication 10 ou 11, **caractérisé en ce que** le bandeau ou cadre extérieur (46) présente des éléments récepteurs ou logements pour des feux latéraux.

13. Engin de travail mobile selon l'une des revendications 1 à 12, **caractérisé en ce que** les profilés creux (30, 30', 32) présentent une surface de déplacement présente une structure antidérapante.

14. Engin de travail mobile selon l'une des revendications 1 à 13, **caractérisé en ce que** les consoles porteuses (26) sont fixées, de préférence par soudage ou par vissage, sur un longeron de cadre (28) solidaire du châssis.

15. Engin de travail mobile selon l'une des revendications 1 à 14, **caractérisé en ce qu'**un escalier d'accès (24) est disposé à l'extrémité du plateau (22), escalier qui est doté d'une main courante tubulaire (68) qui est reliée à une barre de soutien arrière (72) par l'intermédiaire d'une partie supérieure de main courante (70) à courbure convexe et qui délimite conjointement avec la barre de soutien (72) un espace libre (74) dans lequel est disposé au moins un boîtier (76, 78), destiné notamment à recevoir un organe de commande.

16. Engin de travail mobile selon la revendication 15, **caractérisé en ce que** la main courante (68) et la barre de soutien (72) forment un tube métallique d'un seul tenant, courbé en U.

17. Engin de travail mobile selon la revendication 15 ou 16, **caractérisé en ce que** des conduites menant au boîtier, notamment des conduites électriques, pneumatiques ou hydrauliques, sont disposées à l'intérieur de la main courante (68) et/ou de la barre de soutien (72).

18. Engin de travail mobile selon l'une des revendications 15 à 17, **caractérisé en ce que** le boîtier au moins unique (76, 78) est fixé sur la barre de soutien (72).

19. Engin de travail mobile selon l'une des revendications 15 à 18, **caractérisé en ce que** l'escalier d'accès (24) est réalisé pliable ou réglable en hauteur au moins dans la région de son plus bas échelon ou de sa plus basse marche (88).
